(19) Europäisches Patentamt
European Patent Office
Office européen des brevets

(11) **EP 4 628 845 A1**

(12) **EUROPEAN PATENT APPLICATION**

(43) Date of publication:
08.10.2025 Bulletin 2025/41

(21) Application number: 24168799.5

(22) Date of filing: 05.04.2024

(51) International Patent Classification (IPC):
*G01C 21/00* (2006.01)   *G06N 3/0475* (2023.01)

(52) Cooperative Patent Classification (CPC):
**G01C 21/3815; G06N 3/045; G06N 3/0475;**
G01C 21/3848; G01C 21/3852; G06N 20/00

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: Robert Bosch GmbH
70442 Stuttgart (DE)

(72) Inventors:
• **Naumann, Maximilian**
  **66663 Merzig (DE)**
• **Look, Andreas**
  **91077 Kleinsendelbach (DE)**
• **Rudolph, Jan**
  **70178 Stuttgart (DE)**
• **Rakitsch, Barbara**
  **70193 Stuttgart (DE)**
• **Kolter, Jeremy Zieg**
  **Pittsburgh, PA, 15217 (US)**

(54) **TECHNIQUE FOR GENERATING A ROAD MAP FOR AUTOMATED DRIVING**

(57)    A technique for generating a road map, in particular appropriate for use in automated driving, AD, of a vehicle is provided. A method comprises a step of receiving image input data. The image input data comprises acquired image data representing at least one area which is drivable by a vehicle. The method further comprises a step of generating a road map based on the received image input data. The generating of the road map is performed by a trained visual foundation model for road map generation, in particular appropriate for use in AD. The generated road map comprises a road layout within the at least one area drivable by a vehicle along with locally allocated contextual information in view of applicable traffic regulations.

Fig. 6

**Description**

The application relates to a technique for generating a road map, in particular appropriate for use in automated driving (AD) of a vehicle. A method and computing device for generating the road map, a method and computing device for training a visual foundation model for generating the road map, a system for generating the road map, a controller for an AD vehicle, a computer program product and a computer readable storage medium are provided.

Prior Art

On the one hand, conventional foundation models have been used for many different modalities such as images, text, or audio, as e.g., presented by R. Girdhar et al in "ImageBind: One Embedding Space To Bind Them all," arXiv.org:2305.05665v2 [cs.CV] which is incorporated herein by reference. On the other hand, maps contain rich information, such as the road layout, but also contextual information such as speed limits. Vector graphics are one possible way of representing a road layout. "VectorFusion: Text-to-SVG by Abstracting Pixel-Based Diffusion Models" by A. Jain et al., arxiv.org:2211.11319v1 [cs.CV], which is incorporated herein by reference, for example proposes fine-tuning a text-to-image synthesizer to generate vector graphics for buildings, objects, animals, and sceneries.

As recent applications (LLAMA, ChatGPT, Stable Diffusion) show, foundation models (that are trained with a seemingly infinite amount of data) can reach humanlike capabilities in synthesizing and/or generating realistic data. At present it remains an open question, however, how to leverage foundation models for use cases of automated (in particular autonomous) driving.

Disclosure of the Invention

In the following the solution presented herein, is described with respect to the claimed computer-implemented methods, inter alia a method for generating a road map as well as with respect to the claimed computing devices. Features, advantages, or alternative embodiments, which are explained with respect to the method can be assigned to the other claimed objects (e.g., device, system, the computer program, or a computer program product), and vice versa. In other words, claims for the computing device, and/or the system comprising the computing device, can be improved with features described or claimed in the context of the respective method. In this case, the functional features of the method are embodied by structural units of the computing device (and/or system) and vice versa, respectively.

As to a first method aspect, a computer-implemented method for generating a road map, in particular appropriate for use in automated driving (AD) of a vehicle or a robot is provided. The method comprises a step of receiving image input data. The image input data comprises acquired image data representing at least one area which is drivable by a vehicle. The method further comprises a step of generating a road map based on the received image input data. The generating of the road map is performed by a trained visual foundation model for road map generation, in particular appropriate for use in AD. The generated road map comprises a road layout within the at least one area drivable by a vehicle along with locally allocated contextual information in view of applicable traffic regulations.

The road map (briefly: map), being generated with the visual foundation model (also: vision foundation model) with locally allocated contextual information can provide an improved and highly accurate road layout (e.g., with resolution and/or positioning of landmarks, such as roadside verge, accurate down to a few, e.g., 3, cm) along with applicable traffic regulations (e.g., a speed limit, right of way, and/or a permissibility of a lane change) suitable for use in an fully or partially automated driving (AD) vehicle. Alternatively, or in addition, the generated road map may be used for knowledge transfer to downstream or subsequent control systems. In particular, the performance of the AD vehicle itself may be improved by using the generated road maps for training and testing of the AD system of the AD vehicle. Further alternatively or in addition, (e.g., further) visual foundation models may be improved in their counting capabilities, e.g., when using several lanes within the road map as ground truth result of counting lanes within the image input data.

The road map may in particular comprise a high-definition (HD) map. The HD map may in particular be suitable for autonomous driving.

An AD vehicle may be a car, bus, or truck equipped with automated driving (AD) functionality. The AD driving functionality may comprise a full automation (also denoted as autonomous driving, in particular L5), an at least partial (e.g., high, L4, conditional, L3, or partial, L2) automation, and/or an assisted driving automation (e.g., L1, e.g., comprising adaptive cruise control, ACC). A fully-automated vehicle may also be denoted as autonomously driving vehicle and/or self-driving vehicle.

The vehicle may be (or may comprise) a, in particular motorized, passenger vehicle (e.g., requiring a registration), a car, and/or a utility vehicle. The vehicle may be a street-bound vehicle. Alternatively, or in addition, the vehicle may be comprised in a robotic system (e.g., robot in a manufacturing environment).

The applicable traffic regulations may comprise different regulations for different types of vehicles. Alternatively, or in addition, the applicable traffic regulations may define (and/or restrict) a way an area (or path) may be driven or used by the vehicle (e.g., a velocity restriction, a weight restriction, a width restriction, and/or a height restriction, defining parking requirements for a parking lot). E.g., a road or an area may be constrained for use only by vehicles below a predetermined weight threshold (e.g., for driving over a bridge) and/or below a predetermined height threshold (e.g., for driving under a bridge). Alternatively, or in addition, the applicable traffic regulation may comprise a predetermined width threshold, above which vehicles may not use the road (e.g., due to a passage width, a lane width and/or guardrails besides the lane and/or road).

The applicable traffic regulations may be represented as admissible path trajectories (also denoted as paths and/or trajectories) and/or non-admissible path trajectories (e.g., in a pedestrian zone) of the vehicle. Further alternatively or in addition, the applicable traffic regulations may be represented in (and/or by) road markings (e.g., comprising solid and/or dashed lines), traffic signs and/or traffic lights.

The acquired image data may be acquired by a sensor system, in particular an image capturing device. The sensor system and/or image capturing device may be based on at least one of the following technologies: video, radar, LiDAR, ultrasonic, motion, thermal imaging. Alternatively, or in addition, the acquired image data may be acquired by means of a (e.g., earthbound) satellite and/or by the means of a drone. E.g., satellite data may advantageously provide a top view of an extended area (in particular comprising the at least one area which is drivable by the vehicle).

The image input data may comprise at least the acquired image data and/or may in particular comprise digital image data. In particular, the image input data may comprise a top view of the at least one area. Alternatively, or in addition, the image input data may comprise a map, e.g., an (in particular open) street map and/or an (in particular open) navigation map., e.g., in a graphical format.

An area drivable by a vehicle (briefly also: drivable area) may also be denoted as negotiable, passable, trafficable, traversable, and/or accessible by the vehicle. A drivable area (e.g., comprising a road) may in particular comprise an area (e.g., a road) open to traffic, but is not limited to an area (e.g., a road) legally open to the public and/or specifically designed for driving a vehicle. E.g., a private path may be drivable (e.g., in the technical sense), but not designated as "open to traffic".

The area may be defined by positional and/or geographical data and/or, e.g., may comprise a road (also denoted as street), and/or a lane of a street.

The generated road map may comprise, (e.g., simple) geometric representations of the road layout, including, e.g., lines, curves, and/or intersections. Alternatively, or in addition, the generated road map may be represented in or may comprise a scalable vector graphic (SVG). The SVG, any graph, and/or any representation of the road layout may comprise nodes and edges between (e.g., a subset of the) nodes. The nodes may represent (e.g., equidistant) points of a (in particular visible) structure, and the edges may represent relations among the nodes. E.g., neighboring nodes of a line between lanes are connected by an edge.

The generated road map may comprise and/or indicate a road layout. The generated road map comprises contextual information. The contextual information may serve for automatically analyzing applicable traffic regulations. The contextual information may be locally allocated to particular positions in the road map. For example, a speed limitation or a one-way traffic regulation for a particular section of a street may be represented in the respective contextual information, allocated to the part of the road map, where the street section is represented. The contextual information may be provided in the generated road map as annotations and/or as overlay graphic and/or as expandable box and/or as thumbnail image and/or as text embedding.

Generally, the road layout may comprise any (in particular road-related) structure (and/or representation, and/or information) of the at least one area drivable by a vehicle, in particular as visible in a (e.g., photorealistic) top view. The road layout may for example indicate the roads and/or streets which are drivable by the vehicle and/or passageways or crossings for pedestrians or bike lines. The road layout may comprise information necessary for analyzing a traffic-scene. It may refer to static data (in particular without change over time). Alternatively, or in addition, the road layout may be represented by the SVG or any other graphic representation (an/or graph). E.g., a lane may be attributed for left turns to be allowed. Alternatively, or in addition, an arrow indicating the left turn allowability may be graphically represented.

E.g., the road layout may comprise a shape and/or number of lanes, a type of lane (e.g., for use by a motor vehicle such as a car, and/or for use by a bicycle), a width of a lane, a type of separation of neighboring lanes (e.g., by a solid line and/or a dashed line), an arrow indicative of a driving direction of a lane, a stop line, a zebra crossing, a (e.g., boundary of a) parking spot, and/or any (e.g., painted) characteristics of the road visible in a top view. E.g., several lanes, a width of each lane, and/or a type of line (in particular solid or dashed) between neighboring lanes may be visible from above. Alternatively, or in addition, a type of lane for motorized vehicles (e.g., cars) may be distinguished from a type of bicycle lane, and/or a pedestrian path by its width and/or color (e.g., of tarmac and/or pavement).

By the specification of the road layout comprising inter alia any type of information visible from above (and/or in a top view), the generated road map comprises the visible cues required for the (e.g., path) planning of safe driving, in particular AD. The generated road map may thus be applied for automatic planning and subsequent control of the vehicle.

Alternatively, or in addition, the road layout may comprise a predetermined set of primitives, e.g., comprising simple geometric forms, in particular line elements. A line element may be solid or dashed for separating neighboring lanes, among which the vehicle is not allowed to change or is allowed to change, respectively.

Alternatively, or in addition, the line element may comprise a straight line (e.g., of predetermined length) and/or a line element defined by simple function (e.g., comprising a circular segment of a circle of a predetermined radius).

The contextual information comprised in the generated road map may comprise applicable traffic regulations (briefly also: traffic regulations and/or traffic rules), which may be country-dependent and/or region dependent. Alternatively, or in addition, the contextual information may comprise one or more road conditions.

The local allocation of the contextual information may relate to one or more nodes and/or edges of a graph (e.g., SVG), e.g., simple geometric representations , and/or one or more primitives (and in particular their relation(s) to one another), representing (in particular a segment and/or portion of) the road layout of the at least one area drivable by the vehicle, e.g., within city limits, outside city limits, on a motorway, at a junction, at a crosswalk, at a bridge, at a road with significant inclination (e.g., of 4% or more).

E.g., the locally allocated contextual information in view of the applicable traffic regulations may comprise a weight constraint of a lane, a height constraint of a lane, a road structure (in particular comprising a road surface and/or a road condition, e.g., paved, unpaved, bumpy, and/or having potholes), a speed limit, a right of way, a ban of passing, a traffic sign, a traffic light, and/or an accuracy indicator.

The locally allocated contextual information may be specific to a type of vehicle. E.g., a ban of passing and/or a (e.g., low) speed limit may only apply to vehicle above a predetermined weight and/or length (e.g., a bus and/or truck). Alternatively, or in addition, the locally allocated contextual information may be time-specific. The time-specificity may relate to a time of day and/or a day. E.g., a lower speed limit may be applicable for noise reduction during night hours, and/or an access to a lane may be reserved for a group of vehicles (e.g., busses and/or taxis) during weekdays, in particular during rush hours.

The accuracy indicator may, e.g., comprise an expected accuracy of a position of lines bounding lanes, and/or of other landmarks in the road layout. Alternatively, or in addition, the accuracy indicator may comprise a confidence level of correct assignment of an applicable traffic regulation, e.g., of a speed limit (in particular derived from the image input data, e.g., after a semantic segmentation).

By the specification of the locally allocated contextual information in combination with the road layout (and/or the visible cues), the (e.g., path) planning of safe driving, in particular AD, is further facilitated.

The visual foundation model may be or comprise a generative artificial intelligence system (AI), i.e. one that generates or produces content, like images. The visual foundation model may be based on deep neural networks. The visual foundation model may include autoregressive foundation models, which generate inputs piece by piece, and denoising foundation models, which corrupt and then recover the inputs. Alternatively, or in addition, the visual foundation model may comprise a graph generation model for (deep and/or nested) graph generation (e.g., an autoregressive model, a variational autoencoder, a normalizing flow, a generative adversarial network, GAN, and/or a diffusion model), as described by Y. Zhu in "A Survey of Deep Graph Generation: Methods and Applications", arXiv:2203.06714v3, which is incorporated herein by reference.

The visual foundation model may be (pre-) trained (training phase) on broad data (a huge dataset) and may be adapted or fine-tuned (adaption phase) for a variety of different specific downstream tasks. The visual foundation model may be trained by means of self-supervised, transfer, and/or active learning.

A training dataset may comprise an image, for example acquired by an optical sensor system, like e.g. a satellite image/imagery system, of an area as image input data and an annotation (in particular as ground truth) of a (e.g., locally associated) road map comprising the road layout and locally allocated contextual information. The annotation may be embedded in the image or may be locally associated to the image. Alternatively, or in addition, the training dataset may comprise a (e.g., artificially generated) vector graphics (e.g., a scalable vector graphics, SVG) representing a road layout (and/or the resulting image of the road layout) with attributes representing locally allocated contextual information (in particular as ground truth). The image input data associated with the vector graphics may be generated synthetically (e.g., by means of a GAN). Further alternatively or in addition, the training dataset may comprise an image (e.g., acquired by an optical sensor system, e.g. a satellite image/imagery system) as image input data and a (e.g., artificially generated) vector graphics (e.g., a SVG) representing a road layout of the image (and/or the resulting image of the road layout) with attributes representing locally allocated contextual information (in particular as ground truth).

The method according to the first aspect may further comprise a step of providing the generated road map to a controller of a vehicle configured for automated (e.g., autonomous) driving (AD) or to a robot.

The providing of the generated road map may, in conjunction with sensors for detecting other present road users and/or (in particular mobile) obstacles (e.g., parked vehicles, such as cars and/or bicycles), can enable the AD of the vehicle.

The generated road map or parts thereof may be used for car-to-car communication for providing information to other participants in the traffic scene.

The road layout of generated road map may be adjustable in a granularity, in particular for rendering and/or depending on the locally allocated contextual information.

The (e.g., rendered) road layout may be adjustable in granularity by means of a user input (in particular by a user, and/or driver, of the vehicle for AD). The user input may be received by means of a user interface (U I), e.g., comprising a turnable button and/or a graphical user interface (GUI). The UI may be deployed in the vehicle for AD, e.g., at a center console, and/or in particular within the reach of the user, and/or the driver. Alternatively, or in addition, the (e.g., rendered) road layout may be adjustable (in particular without user input) depending on a (e.g., planned) speed of the vehicle for AD.

By the adjustability of the granularity of the road layout, an adaptation according to a need for detail may be enabled. E.g., a coarse granularity may be appropriate for driving at a high speed on a straight motorway. A fine granularity may be suitable for navigating challenging traffic situation, e.g., within city limits, multiple lanes for different types of vehicles, and/or crossings.

The image input data may comprise top view image data of an area comprising the at least one area which is drivable by a vehicle. Alternatively, or in addition, the image input data may be acquired by an optic sensor system, comprising a satellite imagery system, an (in particular airborne) camera system, and/or an aerial photography system, e.g. via one or more drones.

Top view image data, satellited image, and/or aerial image may advantageously provide reliable data on a lane structure, crossroads, and/or zebra crossing, e.g., regarding a width and/or length.

The generating of the road map may comprise generating a (e.g., deep and/or nested) graph comprising nodes and edges. The edges may connect, link and/or relate (in particular subsets of) the nodes representing the road layout. The nodes and edges may be supplementable by attributes representing the locally allocated contextual information. Optionally, the (e.g., deep) graph comprises a, in particular scalable, vector graphic (SVG).

A node may, e.g., represent a point on a line. The edges may relate the nodes comprised in a line. E.g., an edge may connect a point in the middle of the line to its two nearest neighbors, each of the neighbors along a different direction of the line (e.g., one node left and one node right to the middle node). Alternatively, or in addition, an edge between nodes associated with two lines bounding a lane may represent a stop line. Alternatively, or in addition, on a higher level in the (e.g., deep and/or nested) graph, a node may, e.g., represent a line, and an edge may, e.g., represent its role in describing a piece of a lane (e.g., left boundary, right boundary, or centerline). Further alternatively or in addition, on an again higher level in the (e.g., deep and/or nested) graph, a node may, e.g., represent a piece of a lane, and an edge may, e.g., connect pieces of lanes and indicate whether traversal is possible and traffic rule compliant. Still further alternatively or in addition, lines may form a lane, and/or lanes may form a road network (e.g., depending on a traffic agent).

In particular the SVG, may be generated by a (e.g., generic) deep (and/or nested) graph generator. The (e.g., generic) deep (and/or nested) graph generator may in particular generate attributes of nodes and/or edges.

The (e.g., generated) graph may comprise a nested structure. Alternatively, or in addition, the graph may be encoded as or transferred into text data for generating the road map.

By the graph representation with attributes, a particularly simple, memory efficient and/or fast to render representation of the road map may be provided.

The generating of the road map may comprise generating a representation of the road layout using primitives. The primitives may comprise simple geometric forms, in particular a (e.g., solid and/or dashed) line and/or a line element parameterized by a simple function, in particular a linear function and/or a function representing a circular segment.

The primitive may be combinable with the representation in terms of nodes and edges. E.g., a line may be represented by nodes related by edges (e.g., according to the simple function).

The representation in terms of primitives may provide the road map in a simple, memory efficient and/or fast to load to a renderer format.

The trained visual foundation model may comprise a graph generative model. Optionally, the graph generative model may comprise an autoregressive model, a variational autoencoder, a normalizing flow, a generative adversarial network, and/or a diffusion model.

The graph generative model may be configured for (e.g., deep and/or nested) graph generation with nodes, edges relating nodes (e.g., comprised in an SVG) and supplemental attributes for at least a subset of the nodes and edges.

By means of the trained visual foundation model (in particular the graph generative model), attributes to nodes and/or edges may be generated based on the image input data. E.g. a speed limit may be derived from environmental information (e.g., country-dependent, depending on a bending and/or radius of a lane, depending on an inner-city or out-of-city setting, and/or depending on an exposed motorway bridge over a valley). Alternatively, or in addition, based on the image input data, the trained visual foundation model (in particular the graph generative model) may classify a road as heavy-traffic road or light-traffic road (e.g., based on several vehicles in the image input data and/or based its environment comprising indicators such as a densely or sparsely built area).

The trained visual foundation model may be configured for performing a classification and/or a semantic segmentation of the image input data. Alternatively, a preprocessing may be performed on the image input data, e.g. by means of a segmentation algorithm for segmenting relevant structures in the image input data.

The classification and/or semantic segmentation may in particular comprise detecting objects and/or structures, in particular a traffic light, traffic sign and/or road structure (e.g., comprising a road surface).

As to a second method aspect, a method for training a visual foundation model for generating a road map based on received image input data is provided. The method comprises a step of receiving a training dataset. The training dataset may comprise an annotated top view image, in particular acquired by means of an optical sensor system, in particular a satellite imaging system. The annotation may comprise a road layout with locally allocated contextual information. Alternatively, or in addition, the training dataset may comprise a rendered image based on or in the format of a, in particular artificially generated, graphic, e.g., SVG, representing a road map or a road layout (and/or a resulting image of the road layout). The training dataset may in particular comprise the artificially generated graphic (and/or a resulting road layout image) as (at least part of the) ground truth along with an artificially generated (in particular based on the artificially generated graphic) top view image. Further alternatively or in addition, the training dataset may comprise an image (in particular a top view image of a traffic scene, e.g., acquired by an optical sensor system) and a rendered image based on or in the format of a, in particular artificially generated, graphic, e.g., SVG, representing a road map or a road layout in particular for the (top view) image.

The method further comprises a step of training the visual foundation model for generating a road map based on received image input data. The generated road map comprises a road layout along with locally allocated contextual information in view of applicable traffic regulations. Optionally, the training is self-supervised and/or based on a reconstruction loss between the ground truth comprised in the (e.g., annotations or the rendered image of the) received training dataset and the road map generated by the visual foundation model.

A training dataset may be denoted as

$$D = (x_n, y_n)_{n=1}^N$$

, where $x_n$ is a (e.g., satellite) image and $y_n$ is its graphic (in particular SVG) representation, which may for instance be obtained from Open Street maps.

A computing device and/or model architecture may, e.g., comprise a conventional encoder-decoder architecture, where the encoder learns a mapping from the image to the latent space and the decoder learns a mapping from the latent space to the graphic (e.g., SVG) representation.

For the encoder, e.g., a pre-trained image transformer may be used.

The graphic representation, e.g., the SVG, may correspond to (and/or may comprise) a language for describing two-dimensional graphics, in particular in XML. E.g., a deep (and/or nested) graph generator as described by Y. Zhu in "A Survey of Deep Graph Generation: Methods and Applications", arXiv:2203.06714v3, may be used. Alternatively, or in addition, since the graphic representation (e.g., the SVG) is text-based, the decoder may be realized as a language decoder, e.g., a pre-trained text transformer.

As training loss, e.g., cross entropy may be used, in particular as cross-entropy is routinely used for language modeling tasks.

The weights of the visual foundation model may be initialized from a pre-trained default image-to-text model (e.g., TrOCR, https://arxiv.org/pdf/2109.1022.pdf, which is incorporated herein by reference).

In a first extension, once the (e.g., visual foundation) model has been trained, it may also be used as foundation for expert models that only have a small training dataset D' available. For instance, a standard image-to-text model may first be used, with is then fine-tuned on image-to-open street map data and then fine-tuned on HD-maps.

In a second extension, if also text information is given as input in addition to the image, a second encoder, in particular a text encoder, may be added to the (e.g., visual foundation) model.

The training phase may comprise (and/or may be followed by) testing, verifying, and/or validating the (e.g., initially) trained visual foundation model.

The training of the visual foundation model may comprise making use of a generative understanding of traffic rules and/or common road layouts.

By the training of the visual foundation model, a powerful tool for generating road maps based a small number of image input data (e.g., a single satellite image), and/or without human interaction, is provided.

As to a further aspect, a use of the road map is provided. The road map is generated by the method according to the first method aspect for trajectory prediction, path planning, collision avoidance, and/or behavior prediction, in particular of traffic, of or for an AD vehicle.

The generated road map may be stored and/or used locally on a processing unit of the AD vehicle. Alternatively, or in addition, the generated road map may be accessible via a cloud technology (e.g., using a wireless communication technology) of the AD vehicle.

The generated road map may be transferred to vehicle external units like other vehicles, servers and/or mobiles devices by using network technology.

The behavior prediction may relate to any traffic outside the AD vehicle (e.g., comprising further vehicles and/or pedestrians). The behavior prediction may in particular be used for collision avoidance. E.g., by predicting the behavior of other traffic participants, the AD vehicle may be configured for foresightful driving. E.g., a speed may be reduced, and/or a lane changed to avoid a collision with another traffic participant.

Using the generated road map, a safety of the AD may be improved. Alternatively, or in addition, a path to be taken by the AD vehicle may be optimized.

As to a first device aspect, a computing device for generating a road map, in particular appropriate for use in AD of a vehicle is provided. The computing device comprises an input image data receiving interface configured for receiving image input data. The image input data comprises acquired image data representing at least one area which is drivable by a vehicle. The computing device further comprises a road map generating module configured for generating a road map based on the received image input data. The generating of the road map is performed by a trained visual foundation model for road map generation, in particular appropriate for use in AD. The generated road map comprises a road layout within the at least one area drivable by a vehicle along with locally allocated contextual information in view of applicable traffic regulations.

The computing device may be further configured to perform any one of the steps, and/or comprise any one of the features disclosed within the context of the first method aspect.

As to a second device aspect, a computing device for training a visual foundation model for generating a road map based on received image input data is provided. The computing device comprises a training data receiving interface configured for receiving a training dataset. The training dataset may comprise an annotated top view image, in particular acquired by means of an optical sensor system, in particular a satellite imaging system. The annotation may comprise a road layout with locally allocated contextual information. Alternatively, or in addition, the training dataset may comprise a rendered image based on or in the format of a, in particular artificially generated, graphic, representing the road layout (and/or a resulting image of the road layout). The training dataset may in particular comprise the artificially generated graphic (and/or a resulting road layout image) as (at least part of a) ground truth along with an artificially generated (in particular based on the artificially generated graphic) top view image. Further alternatively or in addition, the training dataset may comprise a (in particular top view) image and a rendered image in the format of a, in particular artificially generated, graphic, representing the road layout of the (in particular top view) image.

The computing device further comprises a visual foundation model training module configured for training a visual foundation model for generating a road map based on received image input data. The generated road map comprises a road layout along with locally allocated contextual information in view of applicable traffic regulations. Optionally, the training is self-supervised and/or based on a reconstruction loss between the ground truth comprised in the received training dataset (in particular in the annotations or in the rendered image) and the road map generated by the visual foundation model.

The computing devices of the first device aspect and the second device aspect may be identical.

As to a system aspect, a system for generating a road map, in particular appropriate for use in AD of a vehicle is provided. The system comprises a computing device according to the first method aspect and at least one sensor and/or image capturing device which is configured for providing image input data to the input image data receiving interface of the computing device.

As to a third device aspect, a controller for a vehicle for AD is provided. The controller comprises a reception interface for receiving a generated road map based on received image input data. The road map comprises a road layout within at least one area drivable by a vehicle along with locally allocated contextual information in view of applicable traffic regulations. The controller further comprises a processing unit configured for trajectory planning of an AD vehicle.

As to a further aspect, a computer program product is provided comprising program elements which induce a computing device to carry out the steps of the first method aspect, and/or the second method aspect, when the program elements are loaded into a memory of the computing device.

As to a still further aspect, a computer-readable medium is provided on which program elements are stored that can be read and executed by a computing device to perform steps of the method according to the first method aspect, and/or according to the second method aspect, when the program elements are executed by the computing device.

BRIEF DESCRIPTION OF THE DRAWINGS

Exemplary embodiments of methods, devices, systems, and a controller according to the disclosure are shown in the drawings. In particular:

FIG. 1 shows an exemplary flowchart of a computer-implemented method for generating a road map according to the disclosure,

FIG. 2 shows an exemplary flowchart of a computer-implemented method for training a visual foundation model for generating a road map according to the disclosure,

FIG. 3 shows an architecture of a computing device for generating a road map in a schematic representation,

FIG. 4. schematically illustrates an architecture of a computing device for training a visual foundation model,

FIG. 5 shows an exemplary graphical representation of an urban area, which comprises areas drivable by a vehicle,

FIG. 6 exemplarily shows the urban area of Fig. 5 as a vector graphic,

FIG. 7 schematically depicts an exemplary architecture of a computing device, in particular of the road map generating module 306, and

FIG. 8 exemplarily illustrates the use of the method for automated driving.

DETAILED DESCRIPTION

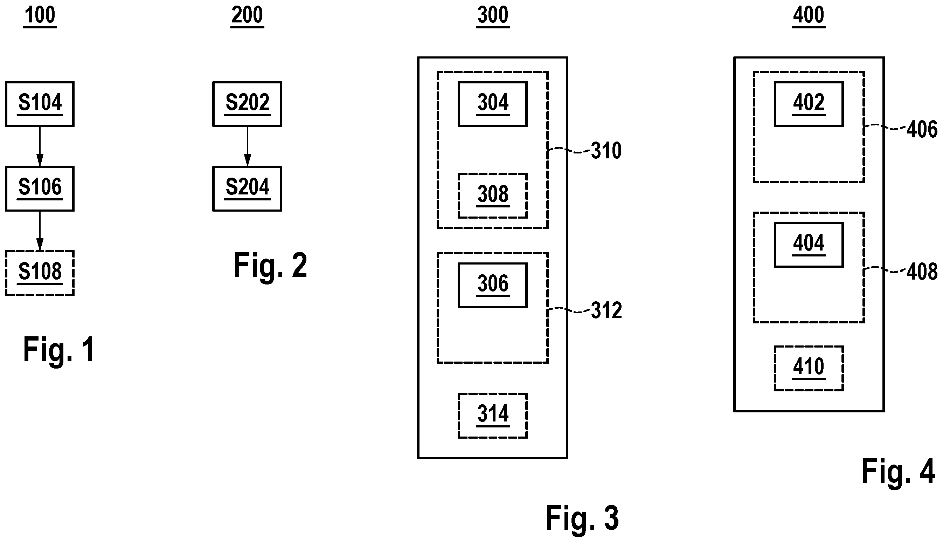

Fig. 1 shows an exemplary flowchart of a computer-implemented method 100 for generating a road map, in particular appropriate for use in automated driving (AD) of a vehicle

The method 100 comprises a step S104 of receiving image input data. The image input data comprises acquired image data representing at least one area which is drivable by a vehicle.

The method 100 further comprises a step S106 of generating a road map based on the received S104 image input data. The generating S106 of the road map is performed by a trained visual foundation model for road map generation, in particular appropriate for use in AD. The generated S106 road map comprises a road layout within the at least one area drivable by a vehicle along with locally allocated contextual information in view of applicable traffic regulations.

Optionally, the method 100 comprises a step S108 of providing S108 the generated S106 road map to a controller of a vehicle configured for AD.

Fig. 2 shows an exemplary flowchart of a computer-implemented method 200 for training a visual foundation model for generating a road map based on received image input data.

The method 200 comprises a step S202 of receiving a training dataset. The training dataset may comprise an annotated top view image, in particular acquired by means of satellite imaging and/or one or more drones. The annotation may comprise a road layout with locally allocated contextual information. Alternatively, or in addition, the training dataset may comprise a rendered image, in particular based on or in the format of a, in particular artificially generated, graphic (e.g., SVG), representing the road layout or the road map (and/or a resulting image of the road layout). The training dataset may in particular comprise the artificially generated graphic (and/or a resulting road layout image) as (at least part of) ground truth along with an artificially generated (in particular based on the artificially generated graphic) top view image. Further alternatively or in addition, the training dataset may comprise a top view image and a rendered image, in particular in the format of a, in particular artificially generated, graphic (e.g., SVG), representing the road layout or the road map of the image.

The method 200 further comprises a step S204 of training a visual foundation model for generating a road map based on received image input data. The generated road map comprises a road layout along with locally allocated contextual information in view of applicable traffic regulations. Optionally, the training S204 is self-supervised and/or based on a reconstruction loss between the ground truth comprised in the received S202 training dataset (in particular in elements of the training dataset which represent the road layout or the road map) and the road map generated by the visual foundation model, wherein the generating of the road map is based on the image included in the received S202 training dataset.

Fig. 3 schematically illustrates an architecture of a computing device 300 for generating a road map, in particular appropriate for use in AD of a vehicle.

The computing device 300 comprises an input image data receiving interface 304 configured for receiving image input data. The image input data comprises acquired image data representing at least one area which is drivable by a vehicle.

The computing device 300 further comprises a road map generating module 306 configured for generating a road map based on the received image input data. The generating of the road map is performed by a trained visual foundation model for road map generation, in particular appropriate for use in AD. The generated road map comprises a road layout within the at least one area drivable by a vehicle along with locally allocated contextual information in view of applicable traffic regulations.

Optionally, the computing device 300 comprises an output interface 308 configured for providing the generated road map to a controller of a vehicle configured for AD.

The input image data receiving interface 304, and optionally the output interface 308, may be embodied by an input-output interface 310. The road map generating module 306 may be embodied by a processing unit 312. The computing device 300 may further comprise at least one memory 314.

Fig. 4 schematically illustrates an architecture of a computing device 400 for training a visual foundation model for generating a road map based on received image input data.

The computing device 400 comprises a training data receiving interface 402 configured for receiving a training dataset. The training dataset may comprise an annotated top view image, in particular acquired by means of an optic sensor system, in particular a satellite imaging system and/or one or more drones. The annotation may comprise a road layout with locally allocated contextual information. Alternatively, or in addition, the training dataset may comprise a rendered image based on a, in particular artificially generated, graphic (e.g., SVG) comprising a road layout (and/or a resulting image of the road layout). The training dataset may in particular comprise the artificially generated graphic (and/or a resulting road layout image) as (at least part of) ground truth along with an artificially generated (in particular based on the artificially generated graphic) top view image. Further alternatively, or in addition, the training dataset may comprise an (in particular top view) image and a rendered image based on a, in particular artificially generated, graphic (e.g., SVG), comprising the road map for the (in particular top view) image.

The computing device 400 further comprises a visual foundation model training module 404 configured for training a visual foundation model for generating a road map based on received image input data. The generated road map comprises a road layout along with locally allocated contextual information in view of applicable traffic regulations.

Optionally, the training is self-supervised and/or based on a reconstruction loss between the ground truth comprised in the received training dataset and the road map generated by the visual foundation model, wherein the generating of the road map is based on the image included in the received training dataset.

The training data receiving interface 402 may be embodied by an input-output interface 406. The visual foundation model training module 404 may be embodied by a processing unit 408. The computing device 400 may further comprise at least one memory 410.

Any one of the processing units 312; 408 may be embodied by a central processing unit (CPU) and/or a graphics processing unit (GPU).

The technique facilitates the efficient and highly accurate generating of road maps in extension of "Lanelet2: A high-definition map framework for the future of automated driving" by F. Poggenhans et al. (2018), which is incorporated herein by reference. While the (e.g., nested) graph structure generated by the method 100 may be (in particular potentially, and/or amongst other options) analogous (and/or identical) to the (e.g., nested) graph structure of Lanelet2, according to the computer-implemented method 100, the graph is (in particular automatically) generated by a (e.g., learned and/or trained) visual foundation model. By contrast, Lanelet2 uses a manual, and/or semi-automatic, "clicking" of the maps, and/or a (e.g., partially) automatic generating of the maps from in-car measurements. E.g., lane detection and/or (e.g., GPS) position may be used generate the maps, which is, however, very expensive, in particular in terms of time, effort, computing resources and memory due to the need to drive to all possible places. On the other hand, the method 100 may make use of (e.g., as image input data) satellite images and/or navigation maps (and/or secure digital, SD, maps), which may, e.g., be available as open street maps.

The technique relates to a generative model (in particular a visual foundation model) that supplies road maps, which in turn can be used for training and testing of a large variety of algorithms for AD, such as behavior prediction and/or planning.

By the technique, the visual foundation model can be trained to generate road maps from image data (briefly also: images). The road map comprises the road layout (also: road structure), represented as a graph, as well as (in particular locally allocated) contextual information, such as speed limits, zebra crossings, and/or right of way.

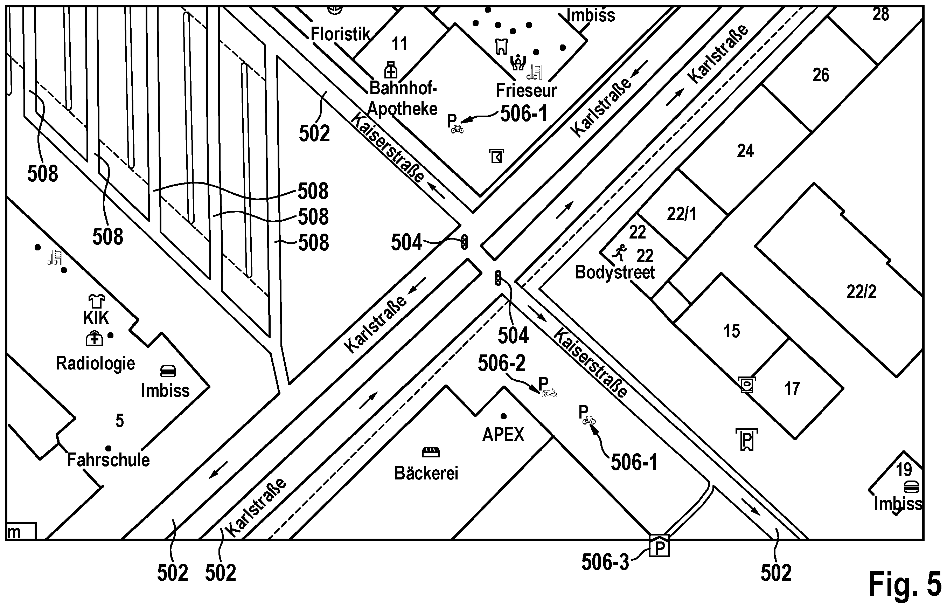

Fig. 5 shows an exemplary graphical representation of an urban area, which comprises areas drivable by a (e.g., AD) vehicle. The exemplary graphical representation comprises the road layout along with locally allocated contextual information. E.g., the (e.g., car) lanes 502 of the two-way Karlstrasse and the one-way Kaiserstrasse are provided with arrows denoting the driving direction of each lane. At the crossing of the two streets (Karlstrasse and Kaiserstrasse), traffic lights are installed, as indicated at reference sign 504. Several types of parking areas are shown in exemplary graphical representation of Fig. 5, namely a parking area for bicycles 506-1, a parking area for motorcycles 506, and a car park 506-3. The drivable area in Fig. 5 further schematically shows bus lanes 508 (e.g., at a bus station).

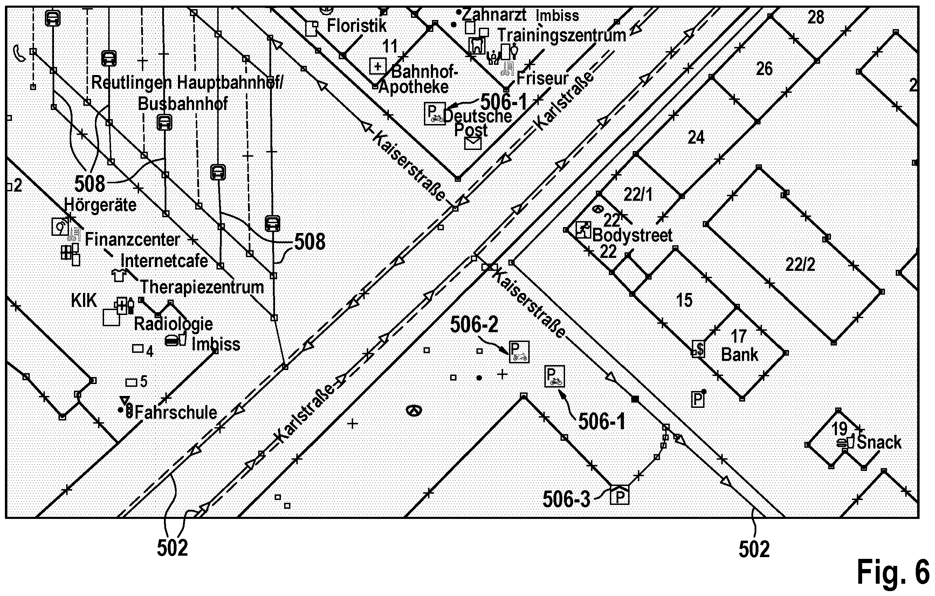

Fig. 6 exemplarily shows the urban area of Fig. 5 as a vector graphic, in particular an SVG. The (e.g., car) lanes 502 and bus lanes 508 are represented by nodes, which are depicted by crosses, and edges linking the nodes. The edges are represented by straight lines in the example of Fig. 6.

Positions requiring to stop (e.g., at a stop line) or give way (e.g., corresponding to further nodes, in addition to the nodes represented by crosses) are schematically indicated by squares. Alternatively of in addition, further nodes (e.g., depicted by squares), such as the curved (and/or bent) way to the car park 506-3 may split (and/or partition) the corresponding lane into straight pieces.

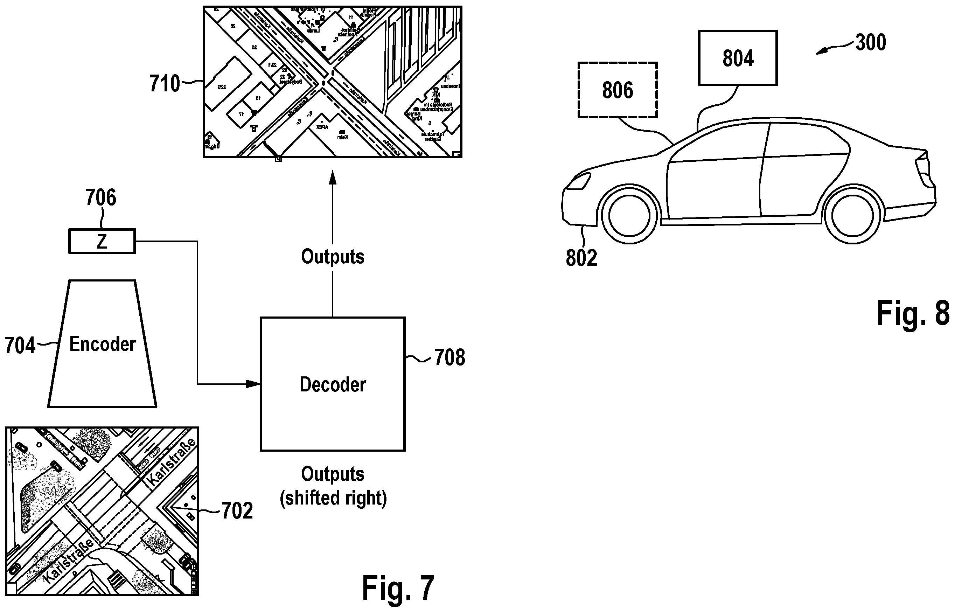

Fig. 7 schematically depicts an exemplary architecture of a computing device 300, in particular of the road map generating module 306 (and/or the visual foundation model). The exemplary architecture comprises an encoder 704 (e.g., a pre-trained image transformer) and a decoder 708. The encoder 704 is configured for receiving image input data, as exemplified by the top view image 702. The encoder 704 is further configured for outputting a latent representation (e.g., denoted by Z) at reference sign 706. The latent representation 706 predicts a correct sequence of shifted tokens and/or words of a graph (and/or XML) as a function of the input.

As training loss, e.g., cross entropy may be used, in particular as cross-entropy is routinely used for language modeling tasks.

A common training technique may comprise predicting a next token conditioned on the input (e.g., at reference sign 702) and past tokens. An efficient implementation comprises inputting a ground truth sequence shifted by a token (e.g., denoted as "shifted right" in Fig. 7) to the decoder 708 and predicting the initial sequence. A sequence may correspond, e.g., to the vector graphics (in particular the SVG) and/or any other map format (e.g., which is aimed at to predict and/or generate).

At reference sign 710, exemplarily a rendered image is shown that may be for visualization only (e.g., as display when the generated road map is used for AD, and/or for manual supervision during a training phase). The rendered image 710 need not used for training.

Fig. 8 exemplarily illustrates the use of the method for AD. At reference sign 802, an AD vehicle is schematically depicted. The AD vehicle 802 comprises a controller (and/or planning unit) 804 and optionally a display 806. The controller (and/or planning unit) 804 receives one or more generated road maps from the computing device 300, which is configured for generating the road maps. On the optional display 806, a graphical representation (e.g., as depicted at reference sign 710 in Fig. 7) of the road map may be provided to a driver of the AD vehicle 802 for monitoring (e.g., for an autonomous vehicle) and/or guidance (e.g., for a vehicle with assisted driving functionality).

Conventional maps, satellite images and open street maps as well as other navigation maps (e.g., in various combinations) can provide a large (and/or seemingly infinite) amount of data for training the visual foundation model for generating the road map based on received image input data and for generating the road map, in particular for use in AD. Alternatively or in addition, for pretraining, artificially generated graphics (e.g., SVGs, in particular as at least part of a ground truth) and their respective rendering (in particular as image input data) can serve as (e.g., truly unlimited) training data pairs.

A computing device 300 (and/or network, e.g., comprising an encoder and a decoder) trained to generate graphs from images (e.g., road graphs from satellite images, which are available at large scale from all around the world; and/or SVGs from their rendered equivalent, which may be done self-supervised for an arbitrary number of generated SVGs) can improve the performance for a variety of downstream tasks. E.g., map data can be added to any dataset for which top view image input data (briefly: images) are available. Adding the map data to top view images enlarges the amount of training and test data for standard routines in the AD scenario (e.g. trajectory prediction, and/or planning) that requires map information.

The technique significantly extends the methods used in VectorFusion, e.g., by training the computing device 300 (and/or network) with reconstruction loss between the true image and the rendered graph image (e.g., generated by the visual foundation model). In contrast to VectorFusion, the graphs used for the training and/or road map generation are generated using a generic deep (and/or nested) graph generator as described by Y. Zhu et al in arxiv.org:2203.06714v3. An advantage of using a deep graph generator is that further relations can be added to the graph, such as node attributes (e.g., road condition such as paved, and/or bumpy) and/or edges between nodes (e.g., a stop sign relating to a particular stop line).

Alternatively, or in addition, the trained (in particular visual foundation) model can also be used in other contexts. According to a first embodiment, a model capable of generating road maps may need a general understanding of traffic rules and common road layouts. The knowledge of traffic rules and common road layouts may be transferred and help to further improve the performance of AD (in particular self-driving) vehicles. According to a second embodiment, which is combinable with the first embodiment, generating road maps may require (in particular "good") counting capabilities (e.g., in terms of several parallel lanes). Conventionally used visual foundation models lack these counting capabilities. Training a visual foundation model on the road map generation process can help to improve the counting capabilities.

The techniques for training the visual foundation model for generating the road map based on received image input data as well as for generating the road map, in particular for use in AD, can be used for analyzing data obtained from a sensor. The sensor may determine measurements of the environment in the form of sensor signals, which may be given by, in particular digital images, e.g., comprising video, radar, LiDAR, ultrasonic, motion and/or thermal images.

Downstream uses of the techniques for training the visual foundation model for generating the road map based on received image input data as well as for generating the road map can comprise virtual sensors, video and/or audio analysis, and/or classification. A virtual sensor may comprise that, based on the sensor signal, an information about elements encoded by the sensor signal may be obtained (e.g., an indirect measurement may be performed based on the sensor signal used as direct measurement), e.g., in view of locally allocated contextual information (in particular traffic rules) associated with an imaged road layout.

The video and/or audio analysis, and/or the classification, can be used for classifying the sensor data, detecting the presence of objects in the sensor data and/or performing a semantic segmentation on the sensor data, e.g., regarding traffic signs and/or road surfaces.

The techniques for training the visual foundation model for generating the road map based on received image input data as well as for generating the road map are specifically suited for any AD application, in particular for self-driving vehicles. Alternatively, or in addition, robots on a manufacturing site, for which a road map is generated according to the technique, can move automatedly and/or autonomously within the manufacturing site (e.g., as the drivable area).

Upstream uses of the techniques for training the visual foundation model for generating the road map based on received image input data as well as for generating the road map, in particular for use in AD, can comprise active learning, testing, and/or data curation in terms of actively selecting data which a technical system (e.g., comprising at least one sensor and/or image capturing device) transmits to a back-end computer (in particular thus reducing data traffic), which in turn may use this information for training a machine learning system (e.g., the visual foundation model), for testing verifying and/or validating the machine learning system, and/or for generating road layouts to train and test AD algorithms.

Further upstream uses of the techniques for training the visual foundation model for generating the road map based on received image input data as well as for generating the road map, in particular for use in AD, can comprise methods and/or data for training, e.g., by generating training data for the training, and/or by generating test, verification, and/or validation data to check whether the trained ML system (e.g., comprising the visual foundation model and/or an AD algorithm) can then be safely operated.

Still further upstream uses of the techniques for training the visual foundation model for generating the road map based on received image input data as well as for generating the road map, in particular for use in AD, can comprise a generative model to generate the training or test data (e.g., for the AD algorithm). After being trained in this way, the ML system (e.g., the AD algorithm) can then be put to downstream use.

Cite Prior Art:

[1] Girdhar et al in "ImageBind: One Embedding Space To Bind Them all", arxiv.org:2305.05665v2 [cs.CV]

[2] "VectorFusion: Text-to-SVG by Abstracting Pixel-Based Diffusion Models" by A. Jain et al., arxiv.org:2211.11319v1 [cs.CV]

[3] Y. Zhu in "A Survey of Deep Graph Generation: Methods and Applications", arXiv:2203.06714v3

[4] M. Li et a.: "TrOCR: Transformer-based Optical Character Recognition with Pre-Trained Models ", https://arxiv.org/pdf/2109.1022.pdf).

[5] Poggenhans, Fabian & Pauls, Jan-Hendrik & Janosovits, Johannes & Orf, Stefan & Naumann, Maximilian & Kuhnt, Florian & Mayr, Matthias. (2018). Lanelet2: A high-definition map framework for the future of automated driving. 1672-1679. 10.1109/ITSC.2018.8569929.

**Claims**

1. Computer-implemented method (100) for generating a road map, in particular appropriate for use in automated driving, AD, of a vehicle, comprising the method steps of:

   - Receiving (S104) image input data, wherein the image input data comprises acquired image data representing at least one area which is drivable by a vehicle;
   - Generating (S106) a road map based on the received (S104) image input data by means of a trained visual foundation model for road map generation, in particular appropriate for use in AD, and wherein the generated (S106) road map comprises a road layout within the at least one area drivable by a vehicle along with locally allocated contextual information in view of applicable traffic regulations.

2. Method (100) according to claim 1, further comprising a step of:

   - Providing (S108) the generated (S106) road map to a controller of a vehicle configured for automated driving, AD.

3. Method (100) according to any one of the preceding claims, wherein the road layout of generated (S106) road map is adjustable in a granularity, in particular for rendering and/or depending on the locally allocated contextual information.

4. Method (100) according to any one of the preceding claims, wherein the image input data comprise top view image data of an area comprising the at least one area which is drivable by a vehicle, and/or wherein the image input data are acquired by means of an optical sensor system, in particular a satellite imagery system and/or a, preferably airborne, camera system, in particular via one or more drones.

5. Method (100) according to any one of the preceding claims, wherein the generating (S106) of the road map, in particular the road layout, comprises generating a, in particular deep and/or nested, graph comprising nodes and edges, wherein the edges connect, in particular subsets of, the nodes, and wherein the nodes and edges are supplementable by attributes representing the locally allocated contextual information; optionally wherein the, in particular deep and/or nested, graph comprises a, in particular scalable, vector graphic, SVG.

6. Method (100) according to any one of the preceding claims, wherein the generating (S106) of the road map comprises generating a representation of the road layout using primitives.

7. Method (100) according to any one of the preceding claims, wherein the trained visual foundation model comprises a graph generative model, optionally wherein the graph generative model comprises at least one of an autoregressive model, a variational autoencoder, a normalizing flow, a generative adversarial network, and a diffusion model.

8. Method (100) according to any one of the preceding claims, wherein the trained visual foundation model is configured for performing a classification and/or a semantic segmentation of the image input data.

9. Computer-implemented method (200) for training a visual foundation model for generating a road map based on received image input data, comprising the step of:

- Receiving (S202) a training dataset comprising at least one of:

  ◦ An annotated top view image, in particular acquired by means of an optical sensor system, in particular by a satellite imaging system and/or by one or more drones, wherein the annotation comprises a road layout with locally allocated contextual information;
  ◦ A rendered image based on a, in particular artificially generated, graphic representing a road layout; and/or
  ◦ A top view image and a rendered image based on a, in particular artificially generated, graphic, representing a road map for the top view image; and

- Training (S204) a visual foundation model for generating a road map based on received image input data, wherein the generated road map comprises a road layout along with locally allocated contextual information in view of applicable traffic regulations; optionally wherein the training (S204) is self-supervised and/or based on a reconstruction loss between the ground truth comprised in the received (S202) training dataset and the road map generated by the visual foundation model.

10. Use of the road map, generated by the method (100) according to any one of claims 1 to 8 for trajectory prediction, path planning, collision avoidance, and/or behavior prediction, in particular of traffic, of an AD vehicle, and/or a robotic system.

11. Computing device (300) for generating a road map, in particular appropriate for use in automated driving, AD, of a vehicle, the computing device (300) comprising:

- An input image data receiving interface (304) configured for receiving image input data, wherein the image input data comprises acquired image data representing at least one area which is drivable by a vehicle;
- A road map generating module (306) configured for generating a road map based on the received image input data, wherein the generating of the road map is performed by a trained visual foundation model for road map generation, and wherein the generated road map comprises a road layout within the at least one area drivable by a vehicle along with locally allocated contextual information in view of applicable traffic regulations.

12. Computing device (300) according to the directly preceding claim, further configured to perform any one of the steps, and/or comprise any one of the features, of any one of the method (100) claims 2 to 8.

13. Computing device (400) for training a visual foundation model for generating a road map based on received image input data, comprising:

- A training data receiving interface (402) configured for receiving a training dataset comprising at least one of:

  ◦ An annotated top view image, in particular acquired by means of an optical sensor system, in particular a satellite imaging system and/or by one or more drones, wherein the annotation comprises a road layout with locally allocated contextual information;
  ◦ A rendered image based on a, in particular artificially generated, graphic representing a road layout; and/or
  ◦ A top view image and a rendered image based on a, in particular artificially generated, graphic, representing a roadmap of the top view image; and

- A visual foundation model training module (404) configured for training a visual foundation model for generating a road map based on received image input data, wherein the generated road map comprises a road layout along with locally allocated contextual information in view of applicable traffic regulations; optionally wherein the training is self-supervised and/or based on a reconstruction loss between the ground truth comprised in the received training dataset and the road map generated by the visual foundation model.

14. System for generating a road map, in particular appropriate for use in automated driving, AD, of a vehicle, the system comprising:

- A computing device (300) according to claim 11 or 12; and
- At least one sensor system and/or image capturing device which is configured for providing image input data to the input image data receiving interface (304) of the computing device (300).

15. A controller (804) for a vehicle for automated driving, AD, comprising:

- A reception interface for receiving a generated road map, wherein the road map is generated by a method according to any of the preceding method claims 1 to 8, based on received image input data, wherein the road map comprises a road layout within at least one area drivable by a vehicle along with locally allocated contextual information in view of applicable traffic regulations; and
- A processing unit configured for trajectory planning of an AD vehicle.

**Fig. 4**

400

406 — 402

408 — 404

410

**Fig. 3**

300

310 — 304 308

312 — 306

314

**Fig. 2**

200

S202 → S204

**Fig. 1**

100

S104 → S106 → S108

**Fig. 5**

EP 4 628 845 A1

Fig. 6

Fig. 7

Fig. 8

Europäisches
Patentamt
European
Patent Office
Office européen
des brevets

## EUROPEAN SEARCH REPORT

**Application Number**

EP 24 16 8799

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | LEVENTE JUH\'ASZ ET AL: "ChatGPT as a mapping assistant: A novel method to enrich maps with generative AI and content derived from street-level photographs", ARXIV.ORG, CORNELL UNIVERSITY LIBRARY, 201 OLIN LIBRARY CORNELL UNIVERSITY ITHACA, NY 14853, 15 March 2024 (2024-03-15), XP091700540, DOI: 10.25436/E2ZW27 | 1,3-11, 13-15 | INV. G01C21/00 G06N3/0475 |
| Y | * pages 3,5,8,9; figures 2,3 * | 2,12 | |
| X | US 2023/041943 A1 (XIA DEGUO [CN] ET AL) 9 February 2023 (2023-02-09) | 1-8,10, 11,14,15 | |
| Y | * paragraphs [0126] - [0130], [0136] * | 2,12 | |
| Y | XIAOFENG WANG ET AL: "DriveDreamer: Towards Real-world-driven World Models for Autonomous Driving", ARXIV.ORG, CORNELL UNIVERSITY LIBRARY, 201 OLIN LIBRARY CORNELL UNIVERSITY ITHACA, NY 14853, 18 September 2023 (2023-09-18), XP091617025, * paragraphs [02.3], [0003] * | 2,12 | |

TECHNICAL FIELDS
SEARCHED (IPC)

G01C
G06N

The present search report has been drawn up for all claims

| Place of search | Date of completion of the search | Examiner |
|---|---|---|
| The Hague | 17 September 2024 | Asthalter, Tanja |

EPO FORM 1503 03.82 (P04C01)

## ANNEX TO THE EUROPEAN SEARCH REPORT
## ON EUROPEAN PATENT APPLICATION NO.

EP 24 16 8799

This annex lists the patent family members relating to the patent documents cited in the above-mentioned European search report.
The members are as contained in the European Patent Office EDP file on
The European Patent Office is in no way liable for these particulars which are merely given for the purpose of information.

17-09-2024

| Patent document cited in search report | Publication date | Patent family member(s) | Publication date |
|---|---|---|---|
| US 2023041943 A1 | 09-02-2023 | CN 114279433 A<br>EP 4105600 A2<br>US 2023041943 A1 | 05-04-2022<br>21-12-2022<br>09-02-2023 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **R. GIRDHAR et al.** ImageBind: One Embedding Space To Bind Them all. *arXiv.org:2305.05665v2 [cs.CV*
- **A. JAIN et al.** VectorFusion: Text-to-SVG by Abstracting Pixel-Based Diffusion Models. *arxiv.org:2211.11319v1 [cs.CV*
- **Y. ZHU et al.** *arxiv.org:2203.06714v3.*
- **GIRDHAR et al.** ImageBind: One Embedding Space To Bind Them all. *arxiv.org:2305.05665v2 [cs.CV*
- **Y. ZHU**. A Survey of Deep Graph Generation: Methods and Applications. *arXiv:2203.06714v3*
- **M. LI**. *TrOCR: Transformer-based Optical Character Recognition with Pre-Trained Models*, https://arxiv.org/pdf/2109.1022.pdf
- **POGGENHANS ; FABIAN ; PAULS ; JAN-HENDRIK ; JANOSOVITS ; JOHANNES ; ORF ; STEFAN ; NAUMANN ; MAXIMILIAN**. *Lanelet2: A high-definition map framework for the future of automated driving.*, 2018, 1672-1679